Europäisches Patentamt

European Patent Office

Office européen des brevets

(11) Veröffentlichungsnummer: **0 252 367**
**B1**

(12) **EUROPÄISCHE PATENTSCHRIFT**

(45) Veröffentlichungstag der Patentschrift:
22.08.90

(21) Anmeldenummer: 87109062.7

(22) Anmeldetag: 24.06.87

(51) Int. Cl.⁵: **F16K 3/316**

(30) Priorität: 07.07.86 CH 2737/86

(43) Veröffentlichungstag der Anmeldung:
13.01.88 Patentblatt 88/2

(45) Bekanntmachung des Hinweises auf die Patenterteilung:
22.08.90 Patentblatt 90/34

(84) Benannte Vertragsstaaten:
DE ES FR GB SE

(56) Entgegenhaltungen:
EP-A- 0 185 204
CH-A- 652 180
GB-A- 1 508 280
US-A- 2 824 715

(73) Patentinhaber: SISTAG, Maschinenfabrik Sidler Stalder
AG, Blumenstein, CH-6274 Eschenbach(CH)

(72) Erfinder: Stalder, Hans, Haus La Brigantine,
CH-6274 Eschenbach(CH)
Erfinder: Sidler, Hans, Hubenfeldstrasse 18,
CH-6274 Eschenbach(CH)

(74) Vertreter: Willi, Anton, J., Alsenmattstrasse 2,
CH-8800 Thalwil(CH)

(54) Flachschieber.

## Beschreibung

Gegenstand der Erfindung ist ein Flachschieber, insbesondere zum Absperren von dickstoffartige, staubförmige oder körnige Medien führenden Förderleitungen, mit einer im Schiebergehäuse vorgesehenen Führungsnut für die Schieberplatte, welche Führungsnut im Kreisquerschnitt aufweisenden Durchflusskanal des Schiebers durch in diesen Kanal hineinragende Führungsleistungspaare seitlich begrenzt ist, die Ausschnitte aufweisen, deren Tiefe geringer ist als die Nuttiefe, wobei die Führungsnut nach oben und unten über den Querschnitt des Durchflusskanals hinaus verlängert ist und dort in entsprechende Spülecken mündet.

In Offenlage der Schieberplatte kann sich Material des durchströmenden Mediums in der Führungsnut absetzen, was beim Schliessen der Schieberplatte besonders wenn dies nur in grösseren Zeitabständen erfolgt, je nach Ablagerungsmaterial zu mehr oder weniger grossem, das Schliessen erschwerendem Reibwiderstand und zu rascher Abnützung des geführten Plattenrandes führt. Die seitlichen' Randpartien der üblicherweise teilkreisförmigen und in Querrichtung meist abgesetzten unteren Schliesskante der Schieberplatte vermögen dabei in den wenigsten Fällen das in der relativ langen Führungsnut abgesetzte Material von den Nutwänden vollständig abzuschaben. Ausserdem besteht die Gefahr, dass solcherart abgeschabtes Material ohne in den Schieberdurchlass auszutreten nach unten bis in die die beiden Seitenführungsnuten verbindende untere Führungsnut geschoben wird, wo es das vollständige Schliessen der Schieberplatte erschwert oder verunmöglicht.

Es wurde deshalb schon vorgeschlagen die Führungsleisten im Bereich des Schieberdurchlasses mit mehreren, in relativ kurzen Abständen aufeinanderfolgenden Kerben zu versehen, deren Tiefe geringer ist als die Nuttiefe. Einerseits kann sich im Bereich dieser in Offenlage der Schieberplatte vom Medium durchströmten Kerben praktisch kein Material absetzen und anderseits kann die Schliesskante der Schieberplatte das wenige sich in den relativ kurzen Nutabschnitten zwischen den Kerben abgesetzte Material beim Schliessen der Schieberplatte bis zur nächsten Kerbe schieben, von wo es vom Reststrom weggeschwemmt wird. Ein solcher Flachschieber ist beispielsweise in der EP-A 185 204 beschrieben.

Abgesehen von der Erschwerung der Herstellung des Schiebergehäuses besitzen die relativ engen Kerben auch den Nachteil, dass sie bei offener Schieberplatte die sonst relativ glatte Strömung im Schieberdurchlass erheblich stören, da die Führungsleisten mit ihrer Mehrzahl von meist scharfkantigen Kerben wie Zahnstangen quer in den zylindrischen Schieberdurchlass ragen, was schon rein optisch zu recht als störend empfunden wird.

Die vorliegende Erfindung bezweckt deshalb einen Flachschieber der genannten Art zu schaffen, der gegenüber solchen Schiebern mit gekerbten Führungsleisten nicht nur einfacher herzustellen ist, sondern insbesondere zu einem erheblich geringeren Durchflusswiderstand führt und dem Material des durchfliessenden Mediums nur wenig Ablagerungsmöglichkeit bietet, jedoch trotzdem eine einwandfreie Führung der Schieberplatte während des Schliessvorgangs gewährleistet. Diese Aufgabe wird erfindungsgemäss durch die Kennzeichnungsmerkmale des Patentanspruchs 1 gelöst.

Der Ausschnitt jeder Führungsleiste kann im Radialschnitt gesehen Bogen-, insbesondere Kreisbogenform oder Trapezform aufweisen. Die grösste Tiefe des Ausschnitts ist dabei zweckmässig 3 bis 5 mm kleiner als die Nuttiefe, während die Länge der Offenseite des Ausschnitts vorteilhaft grösser ist als die halbe Sehnenlänge der in den Durchflusskanal ragenden Führungsleisten. Um beim Schliessvorgang trotz relativ grossem Ausschnitt eine relativ grosse Auflagefläche der abströmseitigen Führungsleisten im unteren Bereich des Durchflusskanals und damit eine entsprechend kleine spezifische Druckbelastung durch das gegen die untere Plattenpartie prallende Medium zu erhalten liegt die Längsmitte des Ausschnitts zweckmässig höher als die Durchlasskanalaxe.

Es sind zwar schon Flachschieber vorgeschlagen worden, bei welchen, wie z.B. in der US-PS 2 824 715 gezeigt, die Führungsnut vollständig ausserhalb des Querschnitts des Schieberdurchlasses liegt, also nicht durch in diesen Querschnitt hineinragende Führungsleisten begrenzt ist.

Um hier das Absetzen von Material in der Führungsnut zu vermeiden, ist diese im unteren, etwa 180° betragenden Durchlassabschnitt abströmseitig durch einen im Querschnitt keilförmigen Ausschnitt in der Gehäusewand bis auf Nuttiefe geöffnet. Dank dieses einseitigen Nutausschnitts kann zwar eine Materialablagerung etwas erschwert werden, was aber durch das Fehlen einer einwandfreien Führung der Schieberplatte im unteren Durchlassbereich erkauft wird.

Ausführungsbeispiele der Erfindung sind in der Zeichnung dargestellt und im folgenden näher beschrieben.

In der Zeichnung zeigt:

Fig. 1 in Frontansicht die eine Hälfte eines ersten Beispiels des Flachschiebers nach der Erfindung,

Fig. 2 eine Frontansicht analog Fig. 1 eines zweiten Beispiels,

Fig. 3 im Axialschnitt das Beispiel nach Fig. 2,

Fig. 4 in grösserem Massstab und schaubildlich ein Detail des Beispiels nach Fig. 2,

Fig. 5 eine Frontansicht analog Fig. 1 eines dritten Beispiels und

Fig. 6 schaubildlich und teilweise weggeschnitten die Schieberplatte gemäss Fig. 3.

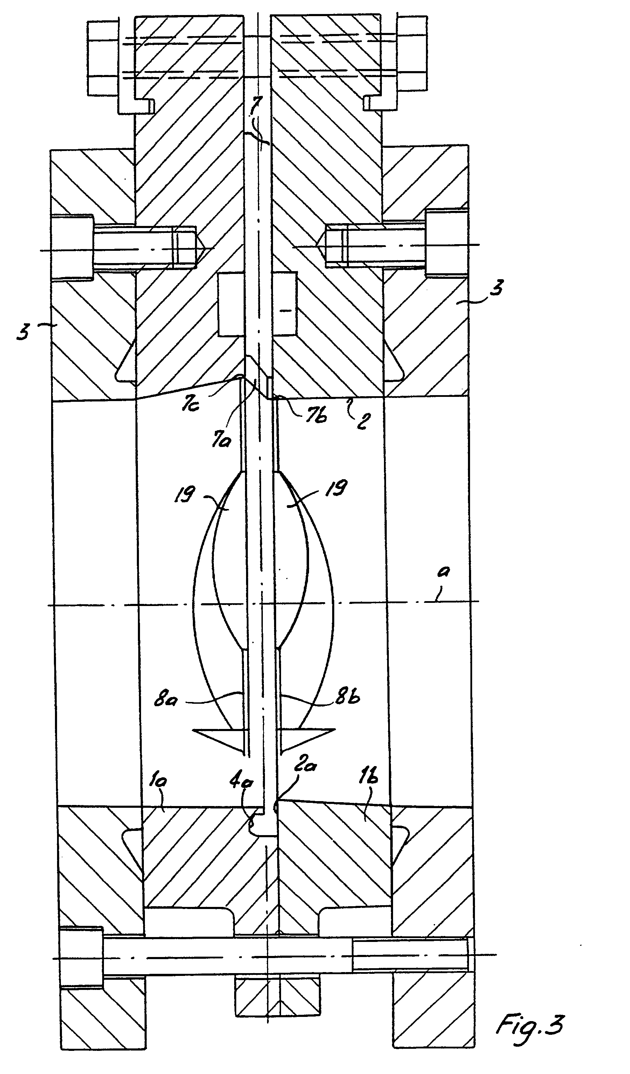

In der Zeichnung sind 1a und 1b die beiden über Zusatzflanschen 3 fest miteinander verbundenen Gehäuseteile des Flachschiebers, wie er beispielsweise in der EP-A 185 204 beschrieben ist. Der zylindrische Durchflusskanal ist mit 2 bezeichnet. Im zuströmseitigen Gehäuseteil 1a ist eine abgesetzte, den Durchflusskanal 2 U-förmig umschliessende Ausnehmung 4. Die verengte Partie 4a der Ausnehmung 4 dient als Dichtungsnut zur Aufnahme einer Dichtung 5, die in bekannter Weise bis in den Bereich einer Querdichtung 6 führt. Die erweiterte Partie 4b der Ausnehmung 4 dient als Führungsnut für die Schieberplatte 7. Diese Führungsnut 4b ist im Bereich des Durchflusskanals 2 durch die einander zugekehrten Innenflächen von Führungsleistenpaaren 8a, 8b seitlich begrenzt, die in den Durchflusskanal 2 hineinragen, wo deren Aussenseiten abgeschrägt sind, um nicht strömungshemmende Prallflächen bzw. Hinterschneidungen zu bilden. Die genannten Innenflächen sind sowohl oben als auch unten über den Bereich des Durchflusskanals 2 hinaus verlängert und enden in gegenüber der Führungsnut 4b erweiterten und nach dem Durchflusskanal 2 hin offenen Spülecken 10a bzw. 10b. Die untere Scheitelpartie der den Durchflusskanal 2 begrenzenden Innenwand des abströmseitigen Gehäuseteils 1b ist gegen die Trennebene der beiden Gehäuseteile hin leicht ansteigend ausgebildet, so dass sie im Scheitelpunkt des Durchflusskanals 2 einige mm übersteht. Diese überstehende, beidseits in die Spülecken 10b hineinragende Wandpartie 2a dient dem unteren zuströmseitig durch eine Schrägfläche 7a abgesetzten segmentförmigen Schliessrand der Platte 7 in deren Schliesslage in bekannter Weise als Anschlag. Im Bereich der oberen Scheitelpartie des Durchflusskanals 2 ist der Gehäuseteil 1a der Bogenform der Schieberplatte entsprechend so angeschrägt, dass in Offenlage der Schieberplatte 7 (Fig. 3) deren untere Schliessrandkante 7c mit dem Scheitel des Durchlasskanals 2 und die zurückgesetzte, obere Schliessrandkante 7b mit dem Scheitel der Anschrägung 2b bündig ist. Die von diesen Scheiteln ausgehenden, der Bogenform des Schliessrandes der Schieberplatte 7 entsprechend gebogenen Endkanten 4c, 4d der Plattenführung zwischen den oberen Gehäuseteilpartien begrenzen nach unten hin die Spülecken 10a.

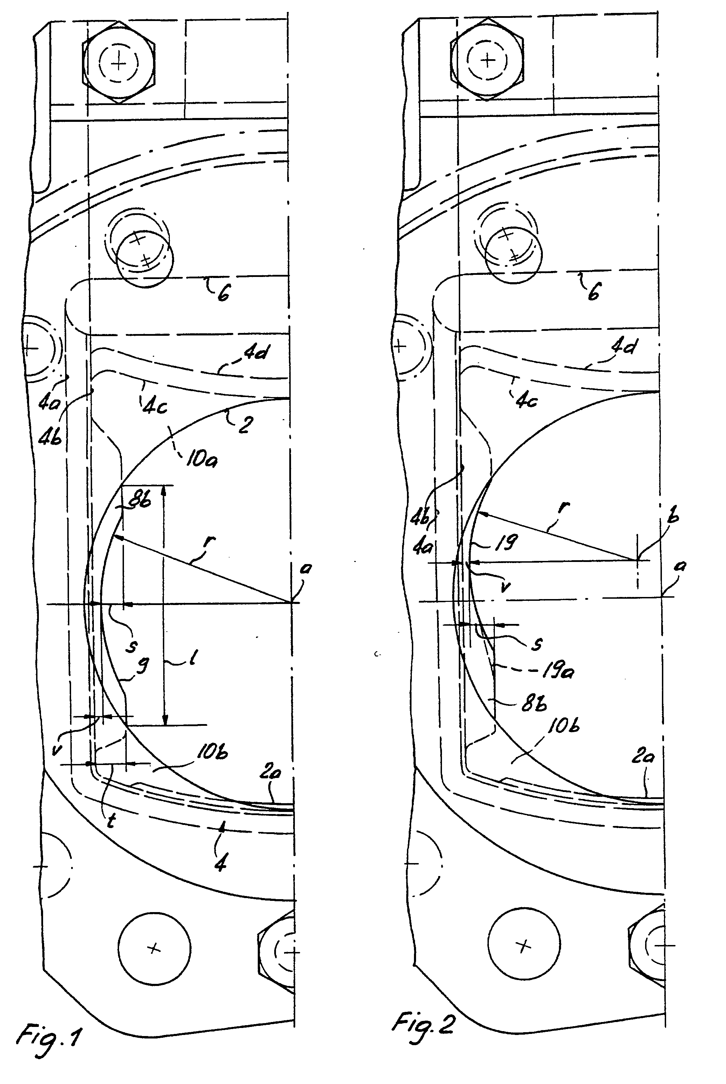

Wie aus Fig. 1 ersichtlich, sind die beiden Führungsleisten 8a bzw. 8b jedes Führungsleistenpaares (in Fig. 1 nur das linke ersichtlich) je mit einem kreisbogenförmigen Ausschnitt 9 versehen, dessen Radius r auf der Axe des zylindrischen Durchflusskanals 2 liegt. Dieser Radius r ist um einen relativ kleinen Betrag v (zweckmässig 3 bis 5 mm) kleiner als die Tiefe t der durch die Führungsleisten 8a, 8b begrenzten Führungsnut 4b, d.h. die grösste Tiefe s des Ausschnitts 9 reicht nicht bis zum Nutboden, sodass auch dort die Schieberplatte 7 noch geführt ist. Dieser bezüglich der Querebene durch die Kanalaxe symmetrische Ausschnitt 9 erstreckt sich über den grössten Teil der Länge 1 der Führungsleisten 8a, 8b, lässt aber besonders im unteren Drittel des Durchflusskanals 2 noch genügend Anliegefläche für die in diesem Schliessbereich besonders stark belastete Schieberplatte 7 übrig. Anderseits gewährleisten die doch relativ kurzen unausgeschnitten verbleibenden und damit volle Tiefe t aufweisenden Führungsflächen, die oben bis zu den Spülecken 10a und unten bis zu den Spülecken 10b reichen, dass die Schieberplatte 7 auf ihrem Schliessweg ohne weiteres in der Lage ist sich in den entsprechenden Nutpartien abgesetztes Material vollständig nach unten auszustossen, wobei das aus den oberen Nutpartien abgeschabte Material durch die Ausschnitte 9 direkt in den Durchflusskanal gelangt, während das aus den unteren Nutpartien ausgestossene Material in die Spülecken 10b gelangt und damit ebenfalls in den Durchflusskanal ausgeschwemmt wird. Wie aus Fig. 1 ersichtlich ragt nur ein relativ schmaler Leistenstreifen in den Querschnitt des Durchflusskanals 2 und da wie gesagt diese Leisten in Axialrichtung stark abgeschrägt sind, stellen sie kein ins Gewicht fallendes Strömungshindernis dar.

An sich braucht der Ausschnitt 9 keineswegs Kreisbogenform zu besitzen; er könnte auch Ellipsen- oder Trapezform aufweisen und das Zentrum des Ausschnittbogens könnte anstatt auf der Kanalaxe a auch seitlich etwas versetzt liegen. Wesentlich aber ist, dass dieser einzige langgezogene Ausschnitt jeder Führungsleiste auch die Herstellung (Guss) der Gehäuseteile gegenüber den bekannten Ausführungen mit einer Mehrzahl enger Kerben erheblich erleichtert.

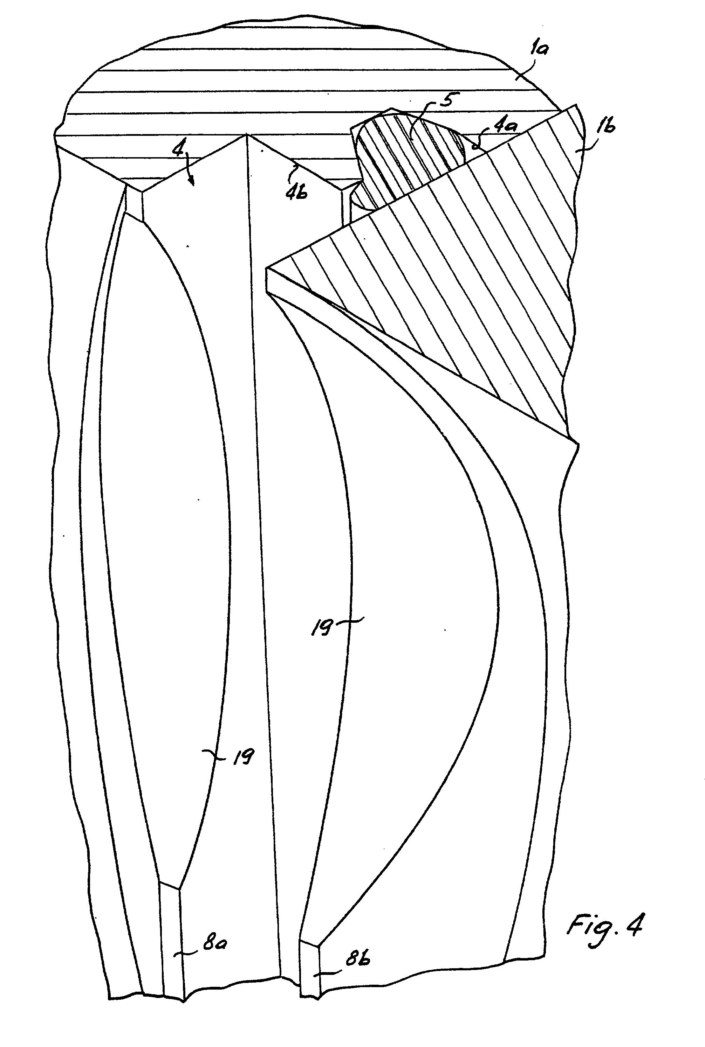

Eine besonders vorteilhafte Ausführungsform der Erfindung ist in den Fig. 2 bis 4 dargestellt. Der hier gezeigte Flachschieber unterscheidet sich nur bezüglich der Ausschnitte der Führungsleisten vom Beispiel nach Fig. 1. Auch hier besitzen die Ausschnitte 19 Kreisbogenform, wobei das Zentrum b aber nicht auf der Durchflusskanalaxe a sondern nach der Ausschnittseite hin und nach oben etwas versetzt ist. Als zweckmässig hat sich eine Versetzung nach der Seite bzw. nach oben hin erwiesen die je kleiner ist als der halbe Durchflusskanalradius, wobei dieses Zentrum stets innerhalb eines Rechteckes im betreffenden oberen Quadranten des Kanalquerschnitts liegt, dessen Seitenlängen in der Praxis zweckmässig zwischen 15 und 35 mm betragen. Wie in Fig. 2 ersichtlich beginnt der Ausschnitt 19 unmittelbar am oberen Eintritt der Nut 4b in den Durchflusskanal 2 und seine grösste Tiefe s ist auch hier um den Betrag v von 3 bis 5 mm kleiner als die Nuttiefe t, während das untere Ausschnittende etwa im unteren Drittel der Führungsleisten endet. Die Ausschnittlänge beträgt somit ein Vielfaches der Nuttiefe. Ein wesentlicher Vorteil dieser Anordnung besteht in der relativ grossen Führungsfläche für die Schieberplatte im unteren Teil des Durchflusskanals 2. Um den Durchströmwiderstand der unteren Führungsleistenpartie noch zu verringern, kann zusätzlich die axparallele Leistenkante am unteren Ausschnittende abgerundet sein wie dies mit gestrichelten Linien bei 19a in Fig. 2 angedeutet ist (letzteres gilt selbstverständlich auch für die Ausschnitte gemäss Fig. 1).

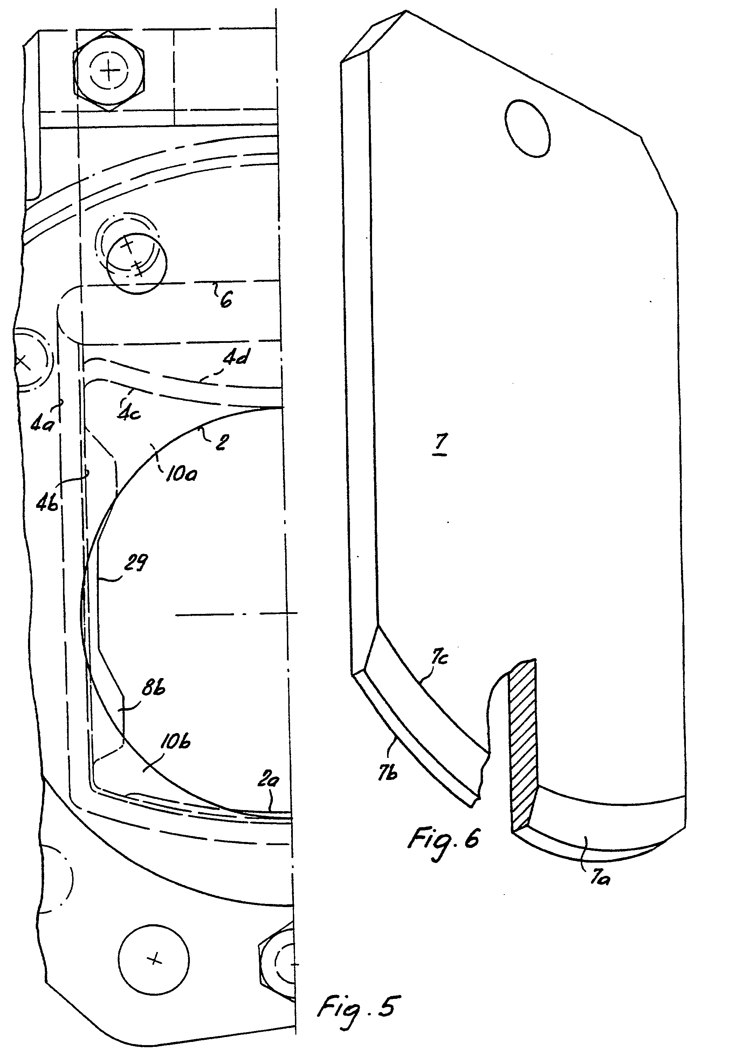

Wie im Zusammenhang mit dem Beispiel nach Fig. 1 erwähnt können die Ausschnitte 19 auch andere als Kreisbogenform aufweisen; so könnten sie Ellipsen-, Rechteck- oder Trapezform aufweisen. Ein solcher trapezförmiger Ausschnitt 29 ist beim Beispiel nach Fig. 5 gezeigt, das im übringen dem Beispiel nach Fig. 2 entspricht.

Gemeinsam ist allen Beispielen, dass die Führungsleisten je nur einen einzigen, nicht ganz bis zum Nutboden reichenden, aber relativ langen Ausschnitt aufweisen, wobei diese Ausschnitte der in Axialrichtung nach aussen hin abgeschrägten Führungsleisten, einerseits weder die Gehäuseherstellung erschweren noch stark strömungshindernd in den Durchflusskanal ragende Leistenpartien belassen, und andererseits die Führungsnut für die Schieberplatte zwar über eine relativ lange Strecke aber nicht vollständig unterbrochen; damit ist erreicht, dass die Schieberplatte beim Schliessen (und Oeffnen) besonders im Bereich der unteren Durchflusskanalpartie einwandfrei geführt bleibt und dass sie in den nicht ausgeschnittenen Führungsnutpartien abgesetztes Material problemlos auszustossen vermag.

**Patentansprüche**

1. Flachschieber, insbesondere zum Absperren von dickstoffartige, staubförmige oder körnige Medien führenden Förderleitungen, mit einer im Schiebergehäuse (1a, 1b) vorgesehenen Führungsnut (4b) für die Schieberplatte (7), welche Führungsnut im Kreisquerschnitt aufweisenden Durchflusskanal (2) des Schiebers durch in diesen Kanal hineinragende Führungsleistenpaare (8a, 8b) seitlich begrenzt ist, die Querschnitte aufweisen, deren Tiefe geringer ist als die Nuttiefe, wobei die Führungsnut nach oben und unten über den Querschnitt des Durchflusskanals (2) hinaus verlängert ist und dort in entsprechende Spülecken (10a, 10b) mündet, dadurch gekennzeichnet, dass die Führungsleisten (8a, 8b) der beiden Paare je einen einzigen Ausschnitt (9; 19; 29) aufweisen, dessen Länge um mindestens das Zweifache grösser ist als die Nuttiefe (t) und der am oberen Eintritt der Führungsnut (4b) in den Querschnitt des Durchflusskanals (2) beginnt und im unteren Drittel der Führungsleiste endet.

2. Flachschieber nach Anspruch 1, dadurch gekennzeichnet, dass der Ausschnitt (9; 19) der Führungsleisten (8a, 8b) Bogenform und zweckmässig Kreisbogenform besitzt, wobei das Zentrum (b) des Kreisbogens über der zur Plattenebene rechtwinkligen Axialebene des Durchflusskanals (2) und nach dem betreffenden Ausschnitt (19) hin versetzt liegt.

3. Flachschieber nach Anspruch 1 oder 2, dadurch gekennzeichnet, dass die axparallelen, den Ausschnitt (9; 19; 29) begrenzenden Kanten der Führungsleisten (8a, 8b) abgerundet sind.

4. Flachschieber nach einem der Ansprüche 1 bis 3, dadurch gekennzeichnet, dass die Tiefe (s) des Ausschnitts (9; 19; 29) der Führungsleisten (8a, 8b) 3 bis 5 mm kleiner ist als die Führungsnuttiefe (t).

**Claims**

1. A gate valve, in particular for shutting-off conveyor pipelines conveying thick-substance-like, powdered or granular media, with a guide groove (4b), provided in the gate valve housing (1a, 1b), for the gate valve plate (7), which guide groove is bounded laterally in the through-flow duct (2), having a circular cross-section, of the gate valve by pairs of guide strips (8a, 8b) which project into this duct and which have cross-sections the depth of which is less than the depth of the groove, the guide groove being extended upwardly and downwardly beyond the cross-section of the through-flow duct (2) and opening out there into appropriate flushing corners (10a, 10b), characterised in that the guide strips (8a, 8b) of the two pairs each have a single cutaway portion (9; 19; 29), the length of which is at least twice as great as the depth (t) of the groove and which begins at the upper entrance of the guide groove (4b) into the cross-section of the through-flow duct (2) and ends in the lower third of the guide strip.

2. A gate valve according to claim 1, characterised in that the cutaway portion (9; 19) of the guide strips (8a, 8b) has the shape of an arc and advantageously the shape of a circular arc, the centre (b) of the circular arc lying above the axial plane, at right angles to the plane of the plate, of the through-flow duct (2) and offset towards the respective cutaway portion (19).

3. A gate valve according to claim 1 or 2, characterised in that the axially-parallel edges, bounding the cutaway portion (9; 19; 29) of the guide strips (8a, 8b) are rounded off.

4. A gate valve according to one of claims 1 to 3, characterised in that the depth (s) of the cutaway portion (9; 19; 29) of the guide strips (8a, 8b) is 3 to 5 mm smaller than the depth (t) of the guide groove.

**Revendications**

1. Robinet-vanne, destiné notamment à la retenue sur des conduites de refoulement transportant des produits assimilables à des liquides épais, ou pulvérulents ou en grains, qui comprend une rainure de guidage (4b) prévue dans le corps de vanne (1a, 1b) pour la plaque de vanne (7), laquelle rainure de guidage est délimitée latéralement dans le canal de passage (2) de la vanne présentant une section circulaire par des paires de bandes de guidage (8a, 8b) dépassant dans ce canal et présentant des échancrures dont la profondeur est inférieure à la profondeur de la rainure, tandis que la rainure de guidage est prolongée vers le haut et vers le bas au-delà de la section du canal de passage (2) et y débouche dans des angles de chasse (10a, 10b) appropriés, caractérisé en ce que les bandes de guidage (8a, 8b) des deux paires ne présentent chacune qu'une seule échancrure (9; 19; 29) dont la longueur est au moins deux fois supérieure à la profondeur de la rainure (t) et qui commence dans la section transversale du canal de passage (2) à l'entrée supérieure de la rainure de guidage (4b) et s'achève au tiers inférieur de la bande de guidage.

2. Robinet-vanne selon la revendication 1, caractérisé en ce que l'échancrure (9; 19) des bandes de guidage (8a, 8b) présente une forme d'arc et opportunément une forme d'arc de cercle, où le centre (b) de l'arc de cercle se trouve au-dessus du plan axial du canal de passage (2) perpendiculaire au plan de la plaque et est décalé vers l'échancrure (9) considérée.

3. Robinet-vanne selon la revendication 1 ou 2, caractérisé en ce que les arêtes, parallèles à l'axe, des bandes de guidage (8a, 8b), qui délimitent l'échancrure (9; 19; 29) sont arrondies.

4. Robinet-vanne selon l'une des revendications 1 à 3, caractérisé en ce que la profondeur (s) de l'échancrure (9; 19; 29) des bandes de guidage (8a, 8b) est inférieure de 3 à 5 mm à la profondeur des rainures de guidage (t).

Fig.1

Fig.2

EP 0 252 367 B1

Fig. 3

Fig. 4

Fig.5

Fig.6